# EUROPEAN PATENT APPLICATION

(11) **EP 2 003 728 A1**
(43) Date of publication of application: **17.12.2008**
(21) Application number: 08151354.1
(22) Date of filing: 13.02.2008
(51) Int. Cl.: H01Q 1/24, H01Q 1/36, H01Q 3/24, H01Q 21/24, H01Q 21/29, H01Q 1/22, H04L 12/28, H04B 7/155

(54) **Gateway equipped with a multi-antenna transceiver system with MISO architecture for wi-fi communications**

(30) Priority: 13.06.2007 IT TO20070420
(71) Applicant: Telsey S.p.A., 31055 Quinto di Treviso (IT)
(72) Inventor: Pesce, Francesco, 35012 Camposampiero (IT); Chino, Francesco, 35125 Padova (IT)
(74) Representative: Jorio, Paolo

(57) **Abstract**

There is described a gateway (1) including an electronic card (4) and a multi-antenna system (5) integrated in the electronic card (4) for transmitting/receiving radiofrequency signals from and to a Wi-Fi communication system (3) in radiofrequency ; the multi-antenna system (5) includes two reception antennas (5a) (5b) fixed permanently to the electronic card (4), in which the first antenna (5a) is positioned on the electronic card (4) so that its direction of maximum reception (R1) lies on a first plane of polarisation (P1), while the second antenna (5b) is positioned on the electronic card (4) so that its direction of maximum reception (R2) lies on a second plane of polarisation (P2) intersecting the first plane of polarisation (P1) associated with the first antenna (5a), forming an angle (α) with it equal to or greater than 45; the gateway (1) also comprises a transceiver module (6) realized using MISO or MIMO technology, which is linked to the antennas (5a) (5b) in order to contemporaneously elaborate the signals received independently by said antennas (5a)(5b)in order to reconstruct on the basis of the independent signals, the signal transmitted by the Wi-Fi communication system (3).

## Description

The present invention relates to a gateway equipped with a multi-antenna transceiver system with MISO architecture for Wi-Fi communications.

In particular, the present invention is relative to a gateway equipped with an integrated multi-antenna transceiver, that is with a 'non-steerable' antenna, which is configured to actuate a wide band communication with a Wi-Fi transceiver (acronym of Wireless Fidelity), and is made according to MISO technology (acronym of Multiple Input Single Output) or according to the technology MIMO (acronym of Multiple Input - Multiple Output); to which the explanation that follows will make explicit reference, without for this reason lacking in generality.

As is known, gateways are devices that manage the exchange of data between one or more communication networks and/or pieces of equipment. In particular, the latest generation gateways are configured in order to be capable of carrying out the specific function of 'point of access' to a principal wide band network, for example an INTERNET network, to manage the exchange of data between the latter and the 'local' Wi-Fi systems, for example LAN Wi-Fi and/or Wi-Fi equipment, when the latter are positioned within a given distance from said point of access.

More precisely, the above mentioned Wi-Fi gateways, typically indicated using the term 'access gateway' are equipped with a multi-antenna transceiver system capable of actuating a communication in radiofrequency between the 'point of access' and the local Wi-Fi system.

It is also known that at present the architecture of the multi-antenna transceiver systems used in the Wi-Fi access gateways are essentially of two types: a first architecture foresees the use of two omnidirectional, steerable, independent antennas, which are positioned outside the protective casing of the access gateway to allow the user to position them manually, in order to optimise gain of the signals transmitted by the various pieces of Wi-Fi equipment to the local Wi-Fi system.

A second architecture foresees the use of two fixed antennas, that is non-steerable and integrated directly on the electronic card located inside the protective casing of the access gateway.

The multi-antenna communication systems of the first type, that is with omnidirectional external antennas present various disadvantages. In the first place, the omni-directional manually steerable external antennas, as well as having relatively high costs, require manual fitting by an user, an operation that considerably affects the overall time and cost for the construction of the access gateway.

Additionally, the electro-mechanical coupling between each external omni-directional antenna and the electronic modules that manage the signals transmitted/received from the same may be subject to mechanical slackening and/or electrical decoupling, due for example to incorrect fitting of the antenna, or to the movement of the antenna by the user, conditions that may cause considerable reductions in the gain of the signal supplied by the antenna to the electronic decodification modules on the electronic card.

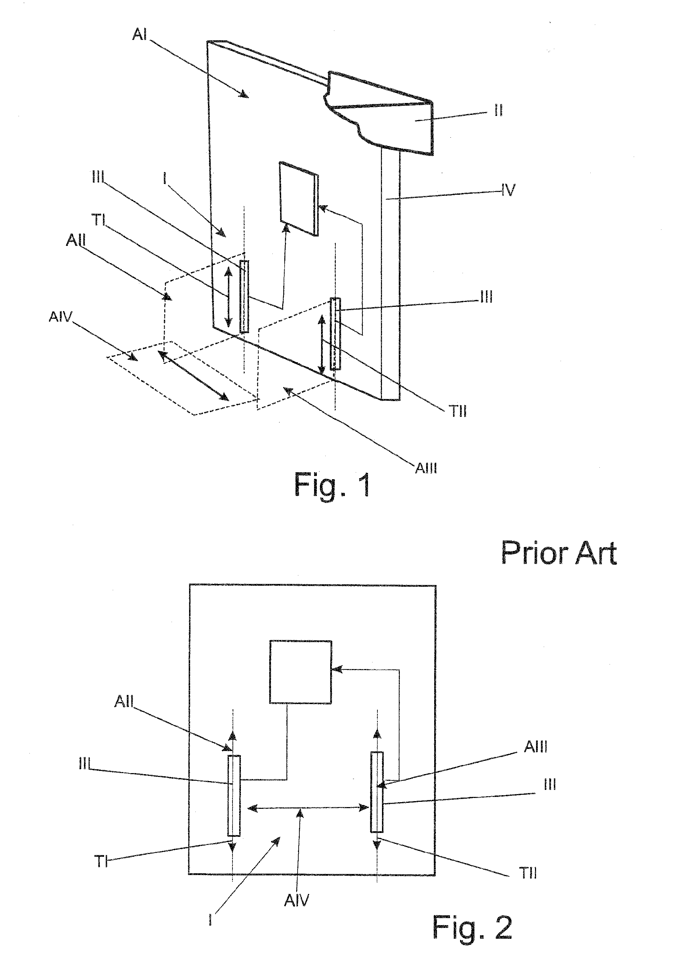

With regard to the multi-antenna systems with integrated antenna, these typically include two antennas permanently fixed on the electronic circuit of the electronic card positioned inside the protective casing of the access gateway. More specifically, figure 1 is a schematic drawing of a multi-antenna system I with integrated antennas contained in a known access gateway II, in which the two antennas indicated by III are permanently fixed on the upper face of an electronic card IV of the access gateway II (shown partially) so that they lie on a plane AI, and are positioned at a given distance from each other in order to be able to receive polarised electromagnetic waves on two planes of polarisation AII and AIII parallel to each other and orthogonal to the plane AI on which the electronic card IV lies. In more detail, the two antennas III are positioned on the electronic card IV so that that the respective directions of maximum reception TI and TII lie on the planes of polarisation AII and AIII respectively.

If on the one hand the access gateways equipped with multi-antenna systems with integrated antennas advantageously offer a reduction in the cost of the gateway and, thanks to the absence of mechanical slackening between the antennas and the electric circuits, assure the absence of attenuations in the gain of the received signal, on the other hand it presents the major disadvantage of not guaranteeing correct reception of the signals when the position of the access gateway is not coherent with that foreseen during the design stages.

In fact, if the access gateway II is positioned so that the antennas III are positioned in a non-coherent manner, that is not aligned, with the AIV plane of polarisation of the electromagnetic waves transmitted by the Wi-Fi system, the reception of the signals by the antennas III is poor. In particular, with reference to the example shown in figures 1 and 2, if the access gateway II is positioned so that the directions of maximum reception TI and TII of the antennas III are parallel to a substantially vertical plane and the plane of polarisation AIV of the electromagnetic waves transmitted by a communicating piece of equipment, is substantially horizontal, that is orthogonal to the directions of maximum reception TI and TII of the antennas III, then in this case the electromagnetic component captured by each antenna III is substantially nil and consequently the access gateway II cannot communicate correctly with the Wi-Fi system.

WO-2006/057679A2 describes a wireless communication system comprising a circuit equipped with a series of reception antennas positioned on a board according top pre-set planes of polarisation, and a modulator/demodulator block that presents a single gateway linked to the antennas through a common node in order to receive an overall signal from one or more antennas. Each antenna is linked to the common node through a switch device, which is selectively closed/opened by a control module according to the electrical power of the signal received by the antenna itself. In use, the control module analyses the power of the signal received by the antennas and closes/opens the switches to link to the modulator/demodulator block only the antenna that receives the signal of greater electrical power with respect to the signals received by the other antenna.

US2003/0117331A1 describes a communication system comprising a circuit equipped with two reception antennas of the 'slot' type positioned on respective planes of polarisation, a reception module and a switch device which alternatively links one of the antennas to the reception module according to the power of the signal received. In use, the reception module elaborates the signal received by the selected antenna reconstructing the signal transmitted.

US2005/0140551A1 describes a communication system comprising a pair of antennas printed on a substrate, a reception module and a switch device that alternatively links one of the two antennas to the reception module so that said reception module can elaborate the signal supplied by the selected antenna.

The systems described above have the drawback of requiring complex configuration of the antennas which control the switches or the switch devices every time a change is made in the signal transmission conditions by the signal transmission source.

For example, every movement of the transmission source with respect to the reception system, determines a variation in the power of the signal received by the system antenna. These variations therefore require the system to make a new discrimination 'in power' of the signals received by the antennas, and to activate the switches according to the signals received, therefore causing considerably slowing the reconstruction of the signal and consequently the communication.

Moreover, the selection of the antenna on the basis of the analysis of the power of the signals can be extremely disadvantageous when one of the signals is affected by a high-power noise. In this case, in fact, the system disadvantageously selects a antenna receiving a signal affected by noise, which can prevent any reconstruction of the signal transmitted by the Wi-Fi source temporarily compromising communication.

Finally, the afore-mentioned systems are particularly disadvantageous since they require the use of switch devices for the selection/linking of the antennas and systems for operating the switches, a function which obviously affects the overall production costs for the system itself.

The purpose of this invention is therefore to realise a gateway that: maintains the advantages deriving from the use of multi-antenna systems with nondirectional integrated antennas, is capable of guaranteeing a high level of reception from the signals independently of the position of the gateway in space, is economic to produce, and finally, guarantees excellent reconstruction of the signal received without causing any slowing of the communication every time the transmitting unit is moved with respect to the gateway.

According to the present invention a gateway is constructed as described in the claim 1 and preferably, but not necessarily, in any of the dependent claims.

The present invention will now be described with reference to the enclosed drawings which illustrate a non-limiting example of actuation, in which:
- the figure 1 is a perspective schematic view, with parts cut away for clarity, of a multi-antenna transmission gateway access system with integrated antennas of a known type;
- the figure 2 is a schematic plan view, with parts cut away for clarity, of a multi-antenna transmission gateway access system with integrated antennas of the access gateway shown in figure 1;
- the figure 3 is a block diagram of a multi-antenna transmission gateway access system with integrated antennas constructed according to the present invention;
- the figure 4 schematically shows the reciprocal positioning of the antennas on the electronic card of the multi-antenna transmission gateway access system shown in figure 3;
- the figure 5 is a schematic plan view, with parts cut away for clarity, of the multi-antenna transmission gateway access system with integrated antennas shown in figure 3;
- the figure 6 shows a lateral perspective view of the multi-antenna transmission gateway access system with integrated antennas shown in figure 3, positioned vertically;
- the figures 7 and 8 are further schematic plan views of the planes of polarisation and the directions of maximum reception of the signal by the antennas in the access gateway shown in figure 3 in two different conditions of polarisation of the signal transmitted;
- the figure 9 shows a perspective view of a first variant on the multi-antenna transmission gateway access system with integrated antennas shown in figure 3;
- the figure 10 shows a schematic view of a second variant on the multi-antenna transmission gateway access system with integrated antennas shown in figure 3;
- the figure 11 shows a schematic view of the planes of polarisation and the directions of maximum reception of the antennas of the access gateway shown in figure 10;
- the figure 12 shows a schematic view of a third variant on the system of multi-antenna transmission with the integrated antennas of the access gateway shown in figure 3;
- the figure 13 shows a schematic view of the planes of polarisation and the directions of maximum reception of the antennas of the access gateway shown in figure 12;
- the figure 14 is a schematic view of a fourth variant of the multi antenna transmission gateway access system with integrated antennas shown in figure 3;
- the figure 15 shows a schematic view of the planes of polarisation and the directions of maximum reception of the antennas of the access gateway shown in figure 14;
- figure 16 shows a block diagram of the multi-antenna transmission system shown in figure 3;
- figure 17 shows a block diagram of the MISO transceiver module of the multi-antenna transmission system shown in figure 16; while
- figure 18 shows a block diagram of the multi-antenna transmission system with integrated antennas of an access gateway.

This invention is based essentially on the idea of constructing an access gateway equipped with an electronic card for communicating with a Wi-Fi system including a Wi-Fi network and/or one or more pieces of Wi-Fi equipment; the electronic card including a multi-antenna system with integrated antennas, which in turn includes at least a first and a second reception antenna fixed permanently on the electronic card, and in which the first antenna is positioned on the electronic card so that its direction of maximum reception lies on a first plane of polarisation, while the second antenna is positioned on the electronic card so that its direction of maximum reception lies on a second plane of polarisation intersecting a first plane of polarization.

It is opportune to specify that hereinafter the term 'direction of maximum reception' of an antenna will be used to mean the direction of polarisation in which it is possible to obtain the maximum antenna gain for an incidental signal that is substantially in phase with the direction of polarization.

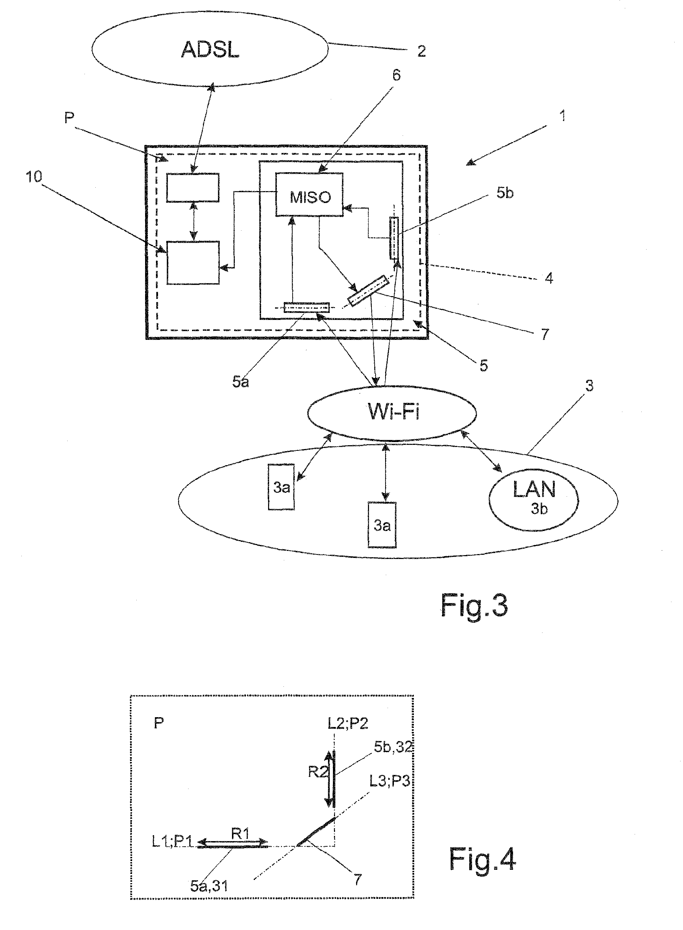

With reference to figure 3, the numeral 1 indicates an access gateway, which is capable on the one hand of communicating with a principal wide band communication network 2, for example an ADSL or HDSL network or any other similar wide band network, through a direct electrical link by cable or by a transceiver system in radiofrequency (not shown); and on the other hand is designed to implement a communication with a Wi-Fi system 3 including at least one piece of equipment 3a and/or a Wi-Fi network 3b, in order to effect an exchange of data between the Wi-Fi system and the communication network 2.

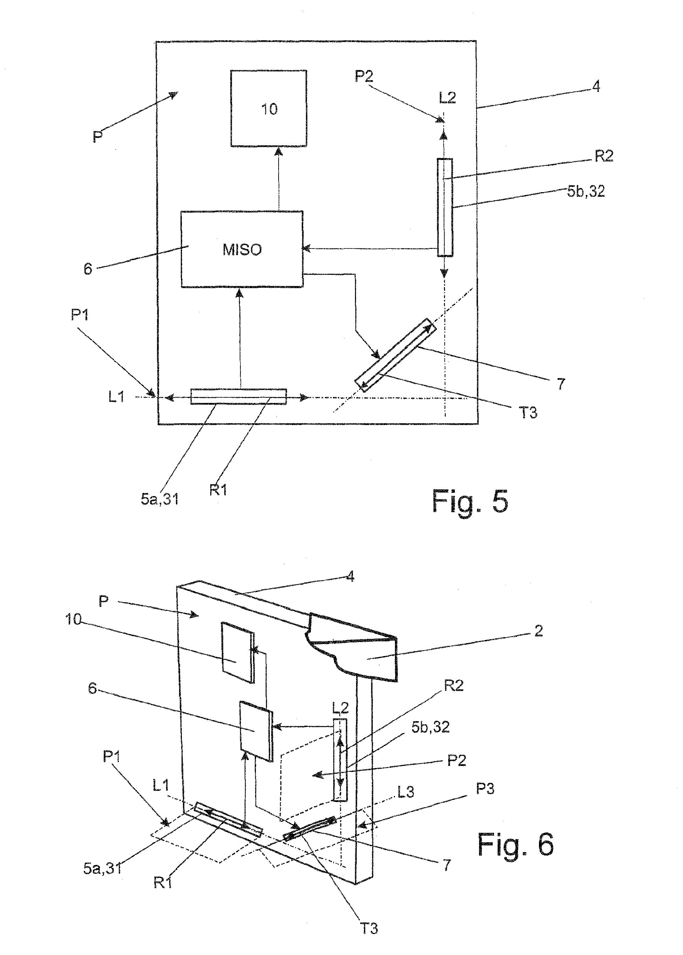

With reference to the figures 3, 5 and 6, the access gateway 1 includes at least one electronic card 4 preferably substantially flat but not necessarily rectangular in shape, which is positioned on a reference plane P, for example a horizontal plane (as shown in figure 5) and a Wi-Fi multi-antenna transceiver system 5 including at least a first antenna 5a and a second antenna 5b, which are permanently fixed on the base of the electronic card 4 to receive the signals transmitted in radiofrequency by the Wi-Fi system 3.

The access gateway 1 also includes an elaboration unit 10 for example a CPU of known type, fixed permanently on the electronic card 4 and designed to decode/encode the signals received/transmitted in order to suitably coordinate the communication of the data exchanged between the communication network 2 and the Wi-Fi system 3, and a transceiver module 6, which is linked on the one hand to a first antenna 5a and to a second antenna 5b to receive the signals picked up by the antennas and on the other hand to the elaboration unit 10 to communicate the signals received.

The transceiver module 6 is of a known type and will not therefore be described further except to specify that it is constructed according to the MISO MRC-OFDM technology (acronym of Maximum Ratio Combining Orthogonal Frequency Division Multiplexing), that is it is capable of contemporaneously managing the reception in radiofrequency of two independent signals picked up by two antennas and actuating the transmission in radiofrequency of a signal through a single antenna, corresponding to one of the receiving antennas, or alternatively through a specific antenna dedicated exclusively to the transmission.

More specifically, the transceiver module 6 with MISO technology receives the two incoming signals from the first antenna 5a and from the second antenna 5b and implements an analysis of the domain of the frequency of the signals at subcarrier level in order to reconstruct the signal transmitted by the Wi-Fi system 3 by means of a vectorial addition that maximises the signal/noise ratio SNR for each subcarrier of the signals received.

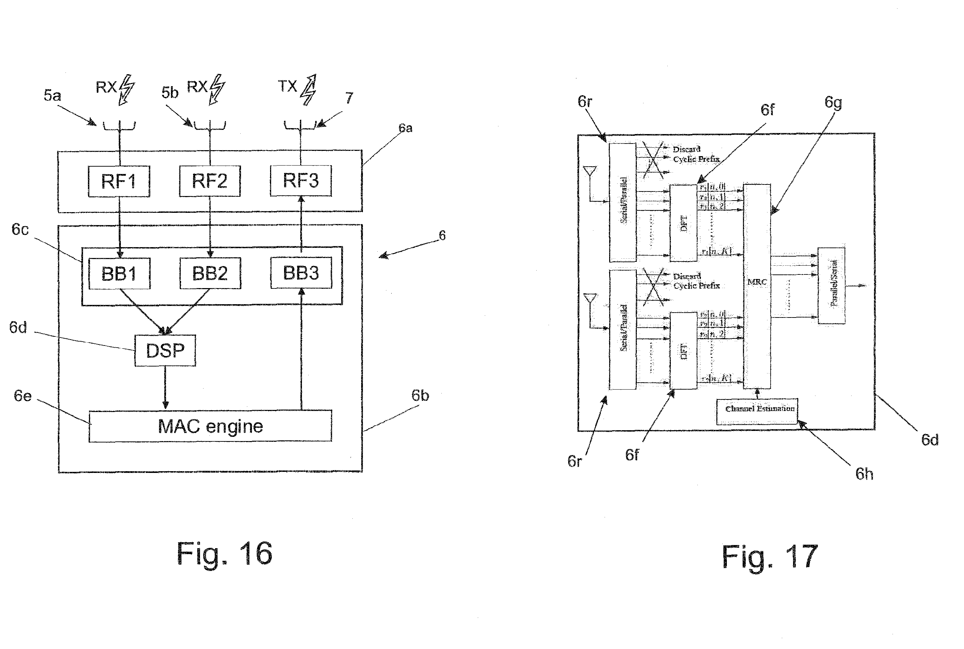

With reference to the figures 16 and 17, the transceiver module 6 with MISO technology includes a demodulator device 6a comprising a first entry linked to first antenna 5a to receive the signal picked up by the first antenna 5a and a second entry linked to the second antenna 5b to receive the signal picked up by said second antenna 5b.

The MISO transceiver module 6 also comprises a MISO MRC-OFDM 6b module which is in turn equipped with a sampling module 6c of a DSP 6d (Digital signal Processor)elaboration module and a MAC 6e (Medium Access Control) module.

In detail in the example shown in figure 17, the DSP 6d module comprises two series/parallel convertors 6r, two DFT (Discrete Fourier Transform blocks 6f, a MRC (Maximum Ratio Combining) 6g combining block and a channel estimator block 6h.

The demodulator device 6a receives two analogical RF signals from the first antenna 5a and the second antenna 5b and supplies them in output in base band to the sampler module 6c which samples them to supply them in entry to the DSP 6d elaboration module. The two series/parallel convertors 6r feed a sample signals of the two signals received to the DFT blocks 6f which convert them into the frequency dominion. The DFT blocks 6f then supply the transformed sample signals in the incoming frequency dominion to the MRC combining block 6g, which combines them on the basis of the subcarriers at DFT level in order to reconstruct the signal transmitted by the Wi-Fi 3 system.

In this phase the estimator block 6h supplies in output the estimated data of the sample signals to the MRC combining block 6g, which on the basis of this estimate selects the best combination of incoming sample signals received on the basis of the best signal/noise ratio in order to supply in output a single signal to feed a decision module OFDM (not shown) which determines, on the basis of the sample signal, the symbols that compose the signal transmitted by the Wi-Fi 3 system.

In addition to the above description it is opportune to state that the MISO transceiver module 6 combining the sample signals in the frequency dominion, uses the 'multipath' diversity to advantageously obtain an OFDM signal linked to the signal transmitted by the Wi-Fi 3 system, having an excellent signal/disturbance ratio.

With reference to the figures 5 and 6, the first antenna 5a is positioned on the electronic card 4 so that its direction of maximum reception R1 lies on a first plane of polarisation P1, while the second antenna 5b is positioned on the electronic card 4 so that its direction of maximum reception R2 lies on a second plane of polarisation P2 intersecting the first plane of polarisation P1.

It is opportune to specify that said positioning of the first antenna 5a and the second antenna 5b on the different planes of polarisation P1 and P2 allows reception by the transceiver module 6 MISO of two strongly independent and unconnected signals, which therefore allows excellent reconstruction of the signal by the transceiver module 6 MISO independently of the position of the gateway 1 in space.

In the example shown in figures 4, 5 and 6 the first antenna 5a and the second antenna 5b are antennas both characterised by a substantially linear polarisation, and are positioned on the electronic card 4 so that the corresponding directions of maximum reception R1 and R2 lie on the planes of polarisation P1 and P2 which intersect in order to present and angle α preferably equal to or greater than 45°.

In particular, the first antenna 5a and the second antenna 5b with linear polarisation include a first and a second straight dipole, which lie on the plane P of the electronic card 4 and are positioned so that their respective longitudinal axes L1 and L2 intersect to form an angle α preferably greater than 45°.

More specifically in the example shown in the figures 4, 5 and 6, the first straight dipole 5a and the second straight dipole 5b are positioned on the plane P with the respective longitudinal axes L1 and L2 reciprocally orthogonal.

The access gateway 1 can also preferably, but not necessarily include, a third antenna 7 which is linked to the transceiver module 6 MISO to transmit the signal generated in output by said transceiver module 6 MISO.

With reference to figure 6, the third antenna 7 is positioned on the electronic card 4 so that its direction of maximum transmission T3 lies on a third plane of polarisation P3 intersecting the first plane of polarisation P1 and the second plane of polarisation P2.

More specifically, in the example shown in figure 5, the third antenna 7 includes a straight dipole, which lies on the plane P and its longitudinal axis L3 is positioned to form an angle β of approximately 45°C with the first antenna 5a.

Alternatively to the dipole, the third antenna 7 can correspond to a planar antenna characterised by an elliptical polarisation in which the direction of maximum reception is positioned in order to be orthogonal to plane P or coplanar to it.

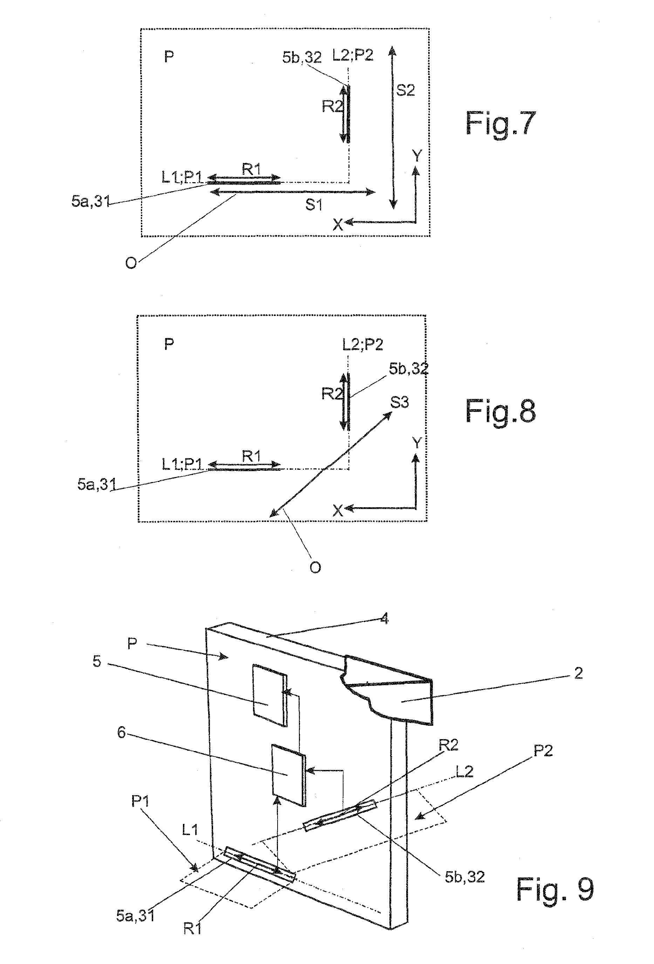

In use, with reference to figure 7, if the access gateway 1 is positioned vertically, that is with its longitudinal axis parallel to an axis of the y-coordinate on a Cartesian plane which lies on the plane P, and a piece of equipment 3a transmits a signal S1 on a horizontal plane of polarisation O - this signal S1 will be completely receivable by the first antenna 5a therefore allowing the transceiver module 6 to reconstruct said signal.

With reference to figure 7, if the piece of equipment 3a transmits a signal S2 on a vertical plane of polarisation O, this signal will be completely receivable by the second antenna 5a therefore allowing the transceiver module 6 to reconstruct said signal.

With reference to the figure 8, if the piece of equipment 3 transmits a signal S3 on an inclined plane of polarisation with an angle of 45° with respect to the Y axis, the first antenna 5a and the second antenna 5b thanks to their positioning each receive a component of the signal S3. In this case the transceiver module 6, thanks to the MISO technology, elaborates both the signals supplied by the first antenna 5a and the second antenna 5b and 'reconstructs' the signal S3 actuating a vector addition on said signal.

The transceiver system of the access gateway described above is extremely advantageous since, apart from being extremely simple and cheap to construct, it is capable of guaranteeing reception of the signal transmitted by the Wi-Fi equipment independently of the position of the access gateway in space.

In fact, as well as completely eliminating the presence of switch components or switch devices with a consequent reduction of the production costs, the transceiver system described above does not require any selection/reconfiguration operation on the antennas when the position of the signal transmission source varies. In particular the positioning of the antennas on different polarized planes makes it possible to supply incoming to the MISO transceiver module, two strongly unrelated signals, that is containing, if examined together, an extremely high quantity of information on the signal transmitted. This information , thanks to the specific elaboration enacted by the MISO transceiver 6 allow excellent and rapid reconstruction of the signal received independently of the position of the Wi-Fi transmission source.

Finally, it is clear that changes and variations can be made to the access gateway described and illustrated here without leaving the area of the present invention as established by the claims.

According to a first variant shown in figure 9, the first antenna 5a includes a straight dipole which is positioned on the electronic card 4 so that the relative longitudinal axis L1 lies on the plane P, while the second antenna 5b includes a straight dipole, which is positioned on the electronic card 4 so that the relative longitudinal axis L2 is substantially orthogonal to said plane P.

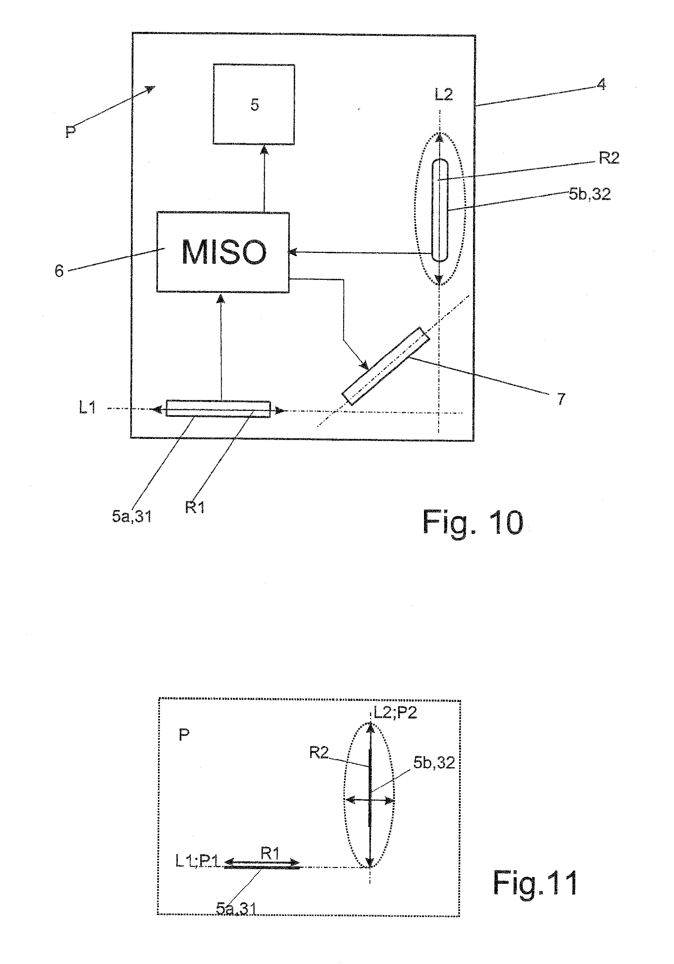

According to a second variant shown in the figures 10 and 11, the first antenna 5a includes a straight dipole, which is positioned on the electronic card 4 so that the relative longitudinal axis L1 lies on the plane P; while the second antenna 5b includes a planar antenna characterised by a substantially elliptical polarisation, which is positioned on the electronic card 4 so that its direction of maximum reception R2 lies on the plane P and intersects the longitudinal axis L1 to form with said longitudinal axis L1 an angle α preferably greater than 45°.

More specifically, the planar antenna with elliptical polarisation defining the second antenna 5b is positioned so that the direction of maximum reception R2 lies on the plane P and is substantially orthogonal to the longitudinal axis L1 of the first antenna 5a.

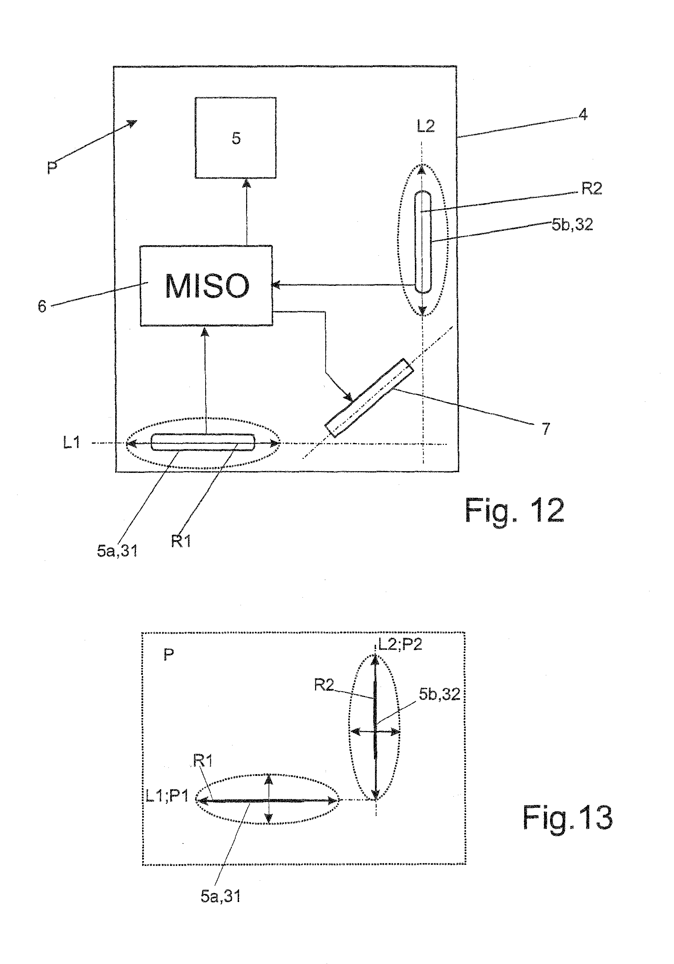

According to the third variant shown in the figures 12 and 13, the first antenna 5a is a planar antenna characterised by a substantially elliptical polarisation, which is positioned so that the direction of maximum reception R1 lies on the plane P; while the second antenna 5b includes a planar antenna of elliptical polarisation, which is positioned so that the direction of maximum reception R2 lies on the plane P and intersects the direction of maximum reception R1 of the first antenna 5a in order to form an angle α preferably greater than 45° with said antenna.

In more detail, the planar elliptical polarisation antenna of the second antenna 5b is positioned so that the direction of maximum reception R2 lies on the plane P and intersects the direction of maximum reception R1 of the first antenna 5a so that it is substantially orthogonal to said direction of maximum reception R1.

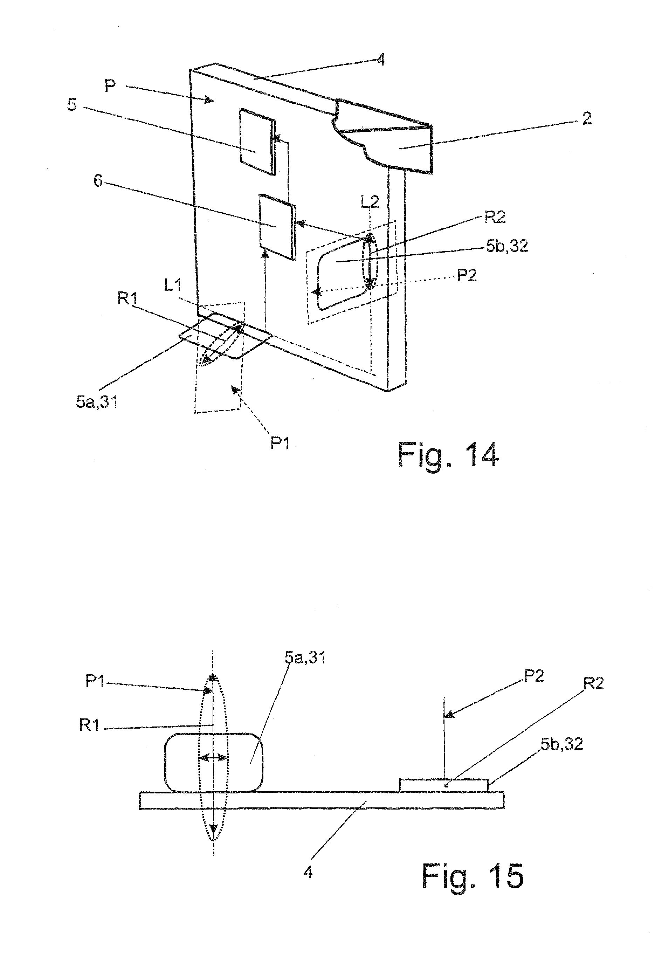

According to a fourth variant shown in figures 14 and 15, the first antenna 5a is a planar antenna characterised by a substantially elliptical polarisation, which is positioned so that the direction of maximum reception R1 is orthogonal to the plane P (figure 15); while the second antenna 5b comprises a planar antenna characterised by a substantially elliptical polarisation, which is positioned so that the direction of maximum reception R2 lies on the plane P and intersects the direction of maximum reception R1 to form an angle α preferably greater than 45°.

More specifically, in the example shown in figure 15, the second antenna 5b is positioned so that the direction of maximum reception R2 lies on the plane P and intersects the direction of maximum reception R1 of the first antenna 5a so that it is substantially orthogonal to it.

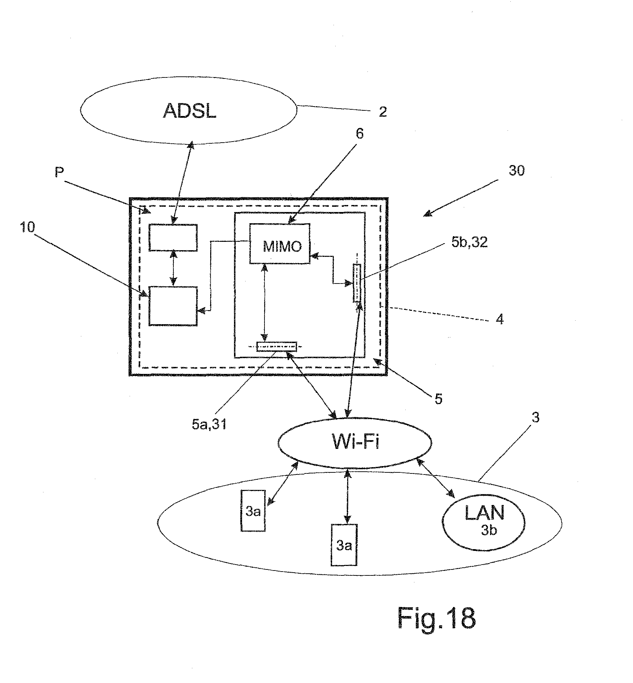

The form of actuation shown in figure 18 refers to an access gateway 30, which is similar to the access gateway 1, and whose parts will be marked, where possible, using the same reference numbers that mark the parts of the access gateway 2.

The access gateway 30 differs from the access gateway 1 inasmuch as the transceiver module 6 rather than being made using the MISO technology described and illustrated above, is made using MIMO technology, which, apart from being capable of receiving multiple signals during the reception phase, implementing the same elaboration carried out by the MISO transceiver module 6, is capable, during transmission, of contemporaneously activating two or more transmitting antennas to transmit independent signals.

For this purpose the access gateway 30 comprises at least two or more transmitting antennas 31 and 32, which transmit two or more signals which tank to the coding foresees by the MIMO technology are independent, that is strongly unrelated to each other, therefore allowing efficient reception by a receiving module of a remote unit.

It is opportune to state that the signal transmission process implemented by the MIMO transceiver module 6 is different from that implemented by the MISO transceiver 6. In particular, the transceiver module 6 with MISO technology is structured to transmit through only one antenna, 7, whose position and direction are therefore capable of satisfying only one direction of polarisation of the signal transmitted, while the MIMO transceiver module 6, cooperating with two or more transmission antennas integrated on the electronic board in different positions, is capable of transmitting independent multiple and strongly unrelated signals with evident advantages for the receiving modules of other remote units or other access gateways.

With reference to the example shown in figure 18, the two transmission antennas 31 and 32 of the access gateway 30 correspond to the reception antennas 5a and 5b. According to this architecture, the MIMO transceiver module 6 uses the antenna 5a and the antenna 5b during the reception of the signals or alternatively the same antennas 5° and 5b during the transmission of the signals.

According to the possible enactment (not illustrated) the two transmission antennas 31 and 32 of the access gateway 30 correspond to two supplementary antennas that are integrated on the electronic board 4 in separate positions and independently of the antennas 5a and 5b. In effect, in this case, the two transmission antennas 31 and 32 can be positioned on the electronic board 4 according to positions of fully equivalent to the positions assumed by the antennas 5a and 5b used in the access gateway 1 realized according to the variations shown in figures 6 - 15.

## Claims

1. Gateway (1)(30) comprising an electronic card (4) and a multi-antenna system (5) integrated into said electronic card (4) for transmitting/receiving radiofrequency signals from and to Wi-Fi means of communication (3) in radiofrequency; said gateway (1) being **characterised by** the fact that said multi-antenna system (5) includes at least two reception antenna (5a) (5b) permanently fixed on said electronic card (4), in which the first antenna (5a) is positioned on the electronic card (4) so that its direction of maximum reception (R1) lies on a first plane of polarisation (P1); and a second antenna (5b) being positioned on said electronic card (4) so that its direction of maximum reception (R2) lies on a second plane of polarisation (P2) intersecting said first plane of polarisation (P1) associated with said first antenna (5a); said gateway (1) including a transceiver module (6) constructed according to MISO or MIMO technology, which is connected to said antennas (5a) (5b) to contemporaneously manage the reception in radiofrequency of two independent signals picked up by said antennas (5a) (5b) in order to reconstruct the signal transmitted by said means of communication (3).

2. Gateway according to claim 1, comprising at least two transmission antennas (31,32) permanently fixed on said electronic board (4), in which the first antenna (31) is positioned on the electronic board (4) so that the direction of maximum transmission (R1) lies on a first plane of polarisation (P1); and a second antenna (32) being positioned on said electronic board (4) so that the direction of maximum transmission (R2) lies on a second plane of polarisation (P2) intersecting with said first plane of polarisation (P1) associated with said first antenna (31); said transceiver module (6) realised according to MIMO technology being linked to said antennas (31,32) in order to contemporaneously transmit two independent and related signals through said two antenna (31, 32).

3. Gateway according to claim 2, in which said two reception antennas (5a,5b)correspond to said two transmission antennas (31,32).

4. Gateway according to any one of the foregoing claim from 1 to 3, in which the first antenna (5a)(31) and the second antenna (5b) are positioned on said electronic card (4) so that the respective directions of maximum reception or of maximum transmission (R1) and (R2) form a first angle (α) equal to or greater than 45°.

5. Gateway according to claim 4, in which the first antenna (5a)(31) and the second antenna (5b)(32) are positioned on said electronic card (4) so that the respective directions of maximum reception (R1) (R2) form a first angle (α) equal to 90°.

6. Gateway according to claims 4 or 5, in which the first antenna (5a)(31) and the second antenna (5b) (32) are positioned on said electronic card (4) so that the respective directions of maximum reception or of maximum transmission (R1) (R2) lie on the plane (P) on which the electronic card (4) lies.

7. Gateway according to claims 4 or 5, in which the direction of maximum reception or of maximum transmission (R1) of the first antenna (5a)(31) lies on the plane (P) on which the electronic card (4) lies, while the direction of maximum reception or of maximum transmission (R2) of the second antenna (5b)(32) is substantially orthogonal to said plane (P) on which the electronic card (4) lies.

8. Gateway according to any of the previous claims, in which at least one of said two antennas (5a) (5b)(31)(32) has a substantially linear polarization.

9. Gateway according to claim 8, in which said first antenna (5a)(31) and said second antenna (5b)(32) include a first and a second straight dipole, which lie on the plane (P) of said electronic card (4) and are positioned so that the respective longitudinal axes (L1) and (L2) respectively intersect to form a first angle (α) equal to or greater than 45°.

10. Gateway according to the claim 9, in which the first and the second straight dipole of said first antenna (5a)(31) and said second antenna (5b)(32) respectively are positioned on the plane (P) with the respective longitudinal axes (L1) and (L2) orthogonal to each other.

11. Gateway according to any of the claims from 1 to 6, in which at least one of said two antennas (5a)(5b)(31)(32) have a substantially elliptical polarisation.

12. Gateway according to claim 11, in which the first antenna (5a)(31) includes a straight dipole which is positioned on the electronic card (4) so that the relative longitudinal axis (L1) lies on the plane (P) on which said electronic card (4) lies; while the second antenna (5b) (32) includes a planar antenna **characterised by** a substantially elliptical polarisation, which is positioned on the electronic card (4) so that the direction of maximum reception or of maximum transmission (R2) lies on the plane (P) on which the electronic card (4) lies and intersects the longitudinal axis (L1) of the first antenna (5a) (31) to form a first angle (α) equal to or greater than 45°.

13. Gateway according to claim 11, in which the first antenna (5a)(31) is a planar antenna having a substantially elliptical polarisation, which is positioned so that the direction of maximum reception or of maximum transmission (R1) lies on the plane (P) on which the electronic card (4) lies; while the second antenna (5b)(32) includes a planar antenna with elliptical polarisation, which is positioned so that the direction of maximum reception or of maximum transmission (R2) lies on the plane (P) on which the electronic card (4) lies and intersects the direction of maximum reception or of maximum transmission (R1) of the first antenna (5a) to form a first angle (α) equal to or greater than 45°.

14. Gateway according to claim 11, in which the first antenna (5a)(31) is a planar antenna having a substantially elliptical polarisation, which is positioned so that the direction of maximum reception or of maximum transmission (R1) is orthogonal to the plane (P) on which the electronic card (4) lies; while the second antenna (5b)(32) includes a planar antenna **characterised by** a substantially elliptical polarisation, which is positioned so that the direction of maximum reception or of maximum transmission (R2) lies on the plane (P) on which the electronic card (4) lies and intersects the direction of maximum reception or of maximum transmission (R1) of the first antenna (5a)(31) to form a first angle (α) preferably equal to or greater than 45°.

15. Gateway according to any of the previous claims, including a third antenna (7) for the transmission of Wi-Fi signals in radiofrequency; said third antenna (7) being positioned on said electronic card (4) so that the direction of maximum transmission (T3) lies on a third plane of polarisation (P3) intersecting the first plane of polarisation (P1) and/or the second plane of polarisation (P2).

16. Gateway according to any of the previous claims, in which said third antenna (7) includes a straight dipole, which lies on the plane (P) on which the electronic card (4) lies and is positioned with its longitudinal axis (L3) forming a second angle (β) with the first antenna (5a) equal to or greater than 45°.

17. Gateway according to claim 15, in which said third antenna (7) includes a planar antenna having a substantially elliptical polarisation with the maximum transmission direction (T3) positioned so that it is orthogonal to the plane (P) on which the electronic card (4) lies or coplanar to it.

18. Gateway according to any of the previous claims, in which said transceiver module (6) is capable of managing contemporaneously the reception in radiofrequency of two independent signals picked up by sad two antennas (5a) (5b) and actuates the transmission in radio frequency of a signal through a single antenna, corresponding to the receiving antennas (5a) (5b), or alternatively through a specific antenna (7) dedicated solely to the transmission.

19. Gateway according to any of the previous claims, in which said MISO or MIMO transceiver module (6) implements an analysis of the dominion of the frequency, at a sub-carrier level, of the two analogical signals incoming to the said first (5a)and the second antenna (5b)in order to reconstruct the signal transmitted by said means of Wi-Fi communication (3) by means of a vectorial sum that maximises the signal/noise ratio for each sub-carrier of said two analogical signals.
